(19) Europäisches Patentamt
European Patent Office
Office européen des brevets

(11) **EP 1 583 619 B1**

(12) **EUROPÄISCHE PATENTSCHRIFT**

(45) Veröffentlichungstag und Bekanntmachung des Hinweises auf die Patenterteilung:
**28.06.2006 Patentblatt 2006/26**

(21) Anmeldenummer: **03795930.1**

(22) Anmeldetag: **18.12.2003**

(51) Int Cl.:
**B21B 31/32** (2006.01)

(86) Internationale Anmeldenummer:
**PCT/EP2003/014573**

(87) Internationale Veröffentlichungsnummer:
**WO 2004/058426 (15.07.2004 Gazette 2004/29)**

(54) **FLACHFÜHRUNGSMODUL, INSBESONDERE FÜR EIN WALZGERÜST**

FLAT GUIDING MODULE, PARTICULARLY FOR A ROLL STAND

MODULE DE GUIDAGE PLAT DESTINE NOTAMMENT A UNE CAGE DE LAMINOIR

(84) Benannte Vertragsstaaten:
**AT IT**

(30) Priorität: **20.12.2002 DE 10261077**

(43) Veröffentlichungstag der Anmeldung:
**12.10.2005 Patentblatt 2005/41**

(73) Patentinhaber:
- **Betriebsforschungsinstitut VDEh,
  Institut für angewandte Forschung GmbH
  40237 Düsseldorf (DE)**
- **Josua Corts Sohn
  42855 Remscheid (DE)**

(72) Erfinder:
- **PEUKER, Gustav
  41066 Mönchengladbach (DE)**
- **POLZER, Jan
  47057 Duisburg (DE)**
- **CORTS, Jochen
  42853 Remscheid (DE)**

(74) Vertreter: **Tilmann, Max Wilhelm et al
König Szynka Tilmann von Renesse
Patentanwälte Partnerschaft
Postfach 11 09 46
40509 Düsseldorf (DE)**

(56) Entgegenhaltungen:
**EP-A- 1 036 605         DE-A- 10 062 489**

- **PATENT ABSTRACTS OF JAPAN Bd. 006, Nr. 117
  (M-139), 30. Juni 1982 (1982-06-30) -& JP 57
  044406 A (KOBE STEEL LTD), 12. März 1982
  (1982-03-12)**
- **PATENT ABSTRACTS OF JAPAN Bd. 1999, Nr.
  09, 30. Juli 1999 (1999-07-30) -& JP 11 090513 A
  (ISHIKAWAJIMA HARIMA HEAVY IND CO LTD),
  6. April 1999 (1999-04-06)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft die Flachführungen, insbesondere für ein beweglich in einem Walzgerüst gelagertes, Walzen tragendes Einbaustück, und ein mit einem solchen Walzgerüst durchzuführendes Walzverfahren.

Aus der Praxis ist es bekannt, Einbaustücke eines Walzgerüsts mit Flachführungen in dem Walzgerüst zu führen. Dabei werden sowohl an dem Einbaustück als auch an den dem Einbaustück zugeordneten Teilen des Ständers Führungen für das Einbaustück in Form von Verschleißleisten vorgesehen. Diese dienen dazu, einen Verschleiß des Walzenständers oder des Einbaustücks zu verhindern und bilden ein leicht austauschbares Verschleißteil. -

Die Führung des Einbaustücks nimmt entscheidenden Einfluß auf die Position der von dem Einbaustück getragenen Walze. Da die Walzenposition ausschlaggebend ist für die Qualität des gewalzten Produkts, kommt somit der durch die Flachführung erreichten Führung der Einbaustücke in dem Walzengerüst eine große Bedeutung zu.

Die Position des Einbaustücks in dem Walzgerüst wird durch das Spiel bestimmt, das sich zwischen dem Einbaustück und den es umgebenden Führungen des Ständers des Walzgerüsts einstellt. Dieses Spiel ist von einer Vielzahl von Faktoren abhängig. Zum einen wird die Ausdehnung des Einbaustücks durch unterschiedliche Walztemperaturen beeinflußt. Ferner entsteht bei dem Einwirken einer auf das Einbaustück wirkenden Walzkraft, für deren Aufbringen der Ständer als Widerlager verwendet wird, eine Einschnürung des Ständers. Das bedeutet, daß die das Einbaustück umgebenden Führungen des Ständers je nach Walzkraft einen unterschiedlichen Abstand zueinander aufweisen können.

Das minimale Spiel bei neuen Flachführungen wird so ausgelegt, daß auch bei maximaler Walzkraft und entsprechender Einschnürung des Walzenständers ein problemloses Verfahren des Einbaustücks im Walzenständer möglich ist. Ein deutlich erhöhtes Spiel stellt sich daher bei geringen Walzkräften ein, da dann die Einschnürung des Ständers entsprechend nachläßt. Hinzu kommt ein zusätzliches Spiel durch den Verschleiß der Flachführungen.

Wird das Spiel der Flachführung zu groß, so hat dies zur Folge, daß das Einbaustück in der Ständerführung keine definierte Lage mehr aufweist. Es kommt zu erhöhten zusätzlichen Kräften und Schlagbeanspruchungen mit verstärktem Verschleiß und frühzeitigem Versagen der Bauteile. Dies wird durch die von dem Walzgut ausgehenden, in die Walzen eingeleiteten Kräfte verursacht, die bei großem Spiel Bewegungen des Einbaustücks in dem Walzenständer verursachen können.

Ferner ist eine präzise Steuerung und nachvollziehbare Regelung des Walzprozesses nicht möglich, da auf die horizontale Position des Einbaustücks kein Einfluß genommen werden kann. Diese Unkenntnis über den Spalt zwischen Einbaustück und Walzenständer behindert die systematische Qualitätsverbesserung des gewalzten Produkts. Insbesondere das Warmwalzen dünnerer Bänder (Dicke < 1 mm) wird daher zunehmend problematisch, da mehr Bandlänge außerhalb des Toleranzbereichs liegt.

US 4,402,207 beschreibt ein Vierwalzengerüst, bei dem die Arbeitswalzen in Einbaustücken gehalten sind, die wiederum innerhalb einer U-förmigen Ausnehmung der Einbaustücke der Stützwalzen zwischen Führungen gehalten werden. Die Einbaustücke der Stützwalzen werden zwischen Führungen des Walzgerüsts gehalten. Die Führungen sind in den ihnen zugeordneten Halterungen in ihrer Position einstellbar. Die Führungen, die bezüglich der Bandlaufrichtung auf einer Seite angeordnet sind, sind als aufblasbare Führungen ausgebildet. Diese weisen an den Platten ausgebildete Kanäle auf, deren Querschnitt zum parallelen Bewegen der Führungen durch Einbringen eines Fluids aufgeweitet oder reduziert werden kann.

Zur Vermeidung des ungewollten Walzenversatzes oder des Walzenschränken (roll cross-over) wird die Führung durch Aufweiten der Kanäle an das die Walze haltende Einbaustück gepreßt. Dieses Verfahren bewirkt, daß das Einbaustück in dem Walzenständer durch Andrücken des Einbaustücks an die eine, in ihrer Position unveränderbare Seite des Walzenständers in einer unveränderbaren Position festgeklemmt wird. Dadurch werden bekannte Regelungsmechanismen; wie eine Dickenregelung (AGC), eine Walzenschränkungsregelung und die horizontale Walzenversatzregelung verhindert. Insbesondere ist bei diesem Festklemmen des Einbaustücks im Walzgerüst eine Regelung der Walzkraft nicht möglich. Eine Erhöhung der Walzkraft wirkt sich dann nicht auf die Anpreßkraft der Walze auf das Walzgut aus, sondern wird vor allem in den Ständer abgeleitet.

Aus Patent Abstract Japan JP 570 444 06 A ist es bekannt, bei zwei einander gegenüberliegend in einem Walzgerüst vorgesehenen Flachführungsmodulen mit einem Basiskörper und einer vom Basiskörper fortbewegbaren Führungsleiste in einer Ausnehmung der Führungsleiste eine Druckkammer eines hydraulischen Zylinders vorzusehen. Nach dem Befüllen der beiden Druckkammern mit einer Druckflüssigkeit wird eine Fliesverbindung zwischen beiden Druckkammern hergestellt. Dadurch kann Druckflüssigkeit aus der Druckkammer des einen Flachführungsmoduls auf der einen Seite des Walzgerüsts in die Druckkammer des anderen Flachführungsmoduls auf der anderen Seite des Walzgerüsts fließen, so daß der gemäß JP 570 444 06 A gewünschte Viskosedämpfungseffekt erzeugt wird. Nachteilig an dieser Technologie ist, daß das Einbaustück im Betrieb nicht präzise festgelegt ist.

Ausgehend hiervon liegt der Erfindung die Aufgabe zugrunde, ein Flachführungsmodul zu schaffen, das vielfältig eingesetzt werden kann und einen Einsatz als Stellglied ermöglicht, sowie ein Walzverfahren vorzuschlagen, das eine präzisere Regelung des Walzprozesses erlaubt.

Diese Aufgabe wird durch den Gegenstand der nebengeordneten Ansprüche gelöst. Vorteilhafte Ausgestaltungen sind in den Unteransprüchen angegeben.

Die Erfindung beruht auf dem Grundgedanken, einen mehrschichtigen Aufbau eines Flachführungsmoduls zu wählen, bei dem zwischen einem Basiskörper und einer Führungsleiste eine oder mehrere Druckzellen vorgesehen sind und die Führungsleiste und der Basiskörper über eine elastische Verbindung miteinander verbunden sind.

Die elastische Verbindung erlaubt es, die Führungsleiste durch die Druckzelle von dem Basiskörper fort zu bewegen. Dadurch kann das mehrschichtige Flachführungsmodul in seinen Ausmaßen verändert werden und neben der Funktion als Verschleißteil auch Stellglied eines Regelungsprozesses sein.

Das erfindungsgemäße Flachführungsmodul wird bevorzugt bei der Führung eines Einbaustücks im Ständer eines Walzgerüsts verwendet. Alternativ kann das erfindungsgemäße Flachführungsmodul jedoch auch bei anderen Prozessen und Vorrichtungen eingesetzt werden, bei denen eine Führungsleiste relativ zu einem Basiskörper bewegt werden muß, um beispielsweise auf einen Körper einzuwirken. Insbesondere kann das Flachführungsmodul auch für die Führung bewegter Teile in Werkzeugmaschinen eingesetzt werden.

Als elastische Verbindung wird insbesondere ein zwischen Basiskörper und Führungsleiste angeordneter, dehnbarer Vollkörper, beispielsweise ein Gummikörper verstanden. Insbesondere ist die elastische Verbindung aus einem nicht-metallischen, elastischen Werkstoff hergestellt. Vorzugsweise ist der Vollkörper über Fügeverfahren fest mit dem Basiskörper und der Führungsleiste verbunden.

Ein Flachführungsmodul kann an dem Einbaustück vorgesehen sein und eine dem Ständer zugewandte Führungsleiste aufweisen. Es kann jedoch ergänzend oder alternativ auch an dem Walzenständer vorgesehen sein und eine dem Einbaustück, beziehungsweise dessen Flachführungsmodul zugewandte Führungsleiste aufweisen. Das Flachführungsmodul kann als Teil des Einbaustücks, beziehungsweise des Walzgerüsts, insbesondere des Walzenständers, ausgebildet sein. Vorzugsweise ist es jedoch als separates Modul ausgebildet, das in entsprechenden Ausnehmungen eines Einbaustücks, beziehungsweise eines Walzgerüsts eingesetzt werden kann. Ebenso kann das Flachführungsmodul an das Einbaustück, beziehungsweise das Walzgerüst angeschraubt oder auf andere Art aufgesetzt und befestigt werden. Besonders bevorzugt weist das Flachführungsmodul die Form der bekannten, bereits eingesetzten Führungsleisten (Verschleißleisten) auf. Dadurch wird es möglich, erfindungsgemäße Flachführungsmodule anstelle der bereits eingesetzten Verschleißleisten einzusetzen, so daß bereits bestehende Walzgerüste mit dem erfindungsgemäßen Erfindungsmodul ohne Anpassungsarbeiten an dem Einbaustück und/oder dem Walzgerüst durchführen zu müssen, nachgerüstet werden können.

Der Basiskörper des erfindungsgemäßen Flachführungsmoduls kann derart ausgebildet sein, daß er ein Wiederlager für die in den Druckzellen erzeugten Kräfte bildet. Insbesondere kann er derart ausgebildet sein, daß die Kräfte in gewünschter Weise auf die Führungsleiste einwirken. Der Basiskörper kann ein separater, an einem gesamthaft austauschbaren Flachführungsmodul angeordneter Körper sein. Er kann auch als Teil des das Flachführungsmodul tragenden Vorrichtung, insbesondere des Walzenständers oder des Einbaustücks, ausgebildet sein.

Als Führungsleiste wird bei einem an einem Einbaustück gehaltenen Flachführungsmodul der dem Ständer zugewandte Teil des Flachführungsmoduls verstanden. Bei einem an dem Ständer gehaltenen Flachführungsmodul ist dies der dem Einbaustück zugewandte Teil des Flachführungsmoduls. Diese Führungsleiste weist eine Führungsseite auf, die dazu ausgebildet ist, in Kontakt mit dem Ständer, beziehungsweise dem Einbaustück zu treten, eine Führung des Einbaustücks zu ermöglichen und gegebenenfalls einen gleichmäßigen Spalt zwischen der Führungsseite der Führungsleiste und der ihr gegenüberliegenden Fläche (Ständer oder Einbaustück) zu bilden. Hierfür ist die Führungsseite besonders bevorzugt an die äußere Kontur des der Führungsleiste zugewandten Bereichs dieser gegenüberliegenden Fläche angepaßt und bildet bevorzugt dessen Oberflächenform nach.

Besonders bevorzugt sind die Führungsleiste und der Basiskörper über ein auf sie aufvulkanisiertes Material zumindest teilweise verbunden. Mit dem Aufvulkanisieren eines beispielsweise eine der Druckzellen begrenzenden Materials auf den Basiskörper und die Führungsleiste kann auf einfache Weise eine besonders feste Verbindung zwischen dem Material und dem Basiskörper und der Führungsleiste geschaffen werden, die gleichzeitig eine Relativbewegung der Führungsleiste zum Basiskörper erlaubt. Durch die gute Verbindung des aufvulkanisierten Materials mit dem Basiskörper und der Führungsleiste wird ein Aufbrechen des Verbundes bis zu hohen Drükken hin verhindert. Dadurch wird ein Flachführungsmodul geschaffen, das hohe Kräften über die Führungsleiste auf den Ständer übertragen kann.

Als Vulkanisieren wird insbesondere ein Verarbeitungsprozess von Kautschuk verstanden, durch den die ursprünglich plastischen, temperaturempfindlichen Kautschukmischungen in elastischen, gebrauchsfähigen Gummi verwandelt werden und außer der Elastizität die für die künftige Verwendungszwecke erforderliche Festigkeit und Temperaturbeständigkeit erhalten werden. Aufvulkanisieren ist insbesondere der Vorgang des Aufbringens der Kautschukmischung auf einen Körper und gleichzeitigem oder anschließenden Vulkanisieren.

Gemäß einer bevorzugten Ausführungsform der Erfindung weist das aufvulkanisierte Material nach dem Vulkanisieren bei Raumtemperatur eine anwendungsspezifisch festzulegende Elastizität auf.

Um einen vordefinierten Spalt zwischen der Führungsleiste und der der Führungsleiste gegenüberliegenden Fläche (Ständer, beziehungsweise Einbaustück) einstellen zu können, ist es bei durch die Einwirkung der Kräfte des Walzguts gekipptem Einbaustück vorteilhaft, wenn auch die Führungsleiste relativ zum Basiskörper gekippt werden kann. Hierzu kann ein erfindungsgemäßes Flachführungsmodul für ein Walzgerüst mit einem Basiskör per und einer Führungsleiste mit mehreren zwischen diesen angeordneten Druckzellen mindestens zwei unterschiedliche Druckleitungen aufweisen, die jeweils unterschiedliche Druckzellen mit Druckquellen unterschiedlichen Drucks verbinden. Indem mindestens zwei Druckzellen mit unterschiedlichem Druck beaufschlagt werden, wird die Führungsleiste unterschiedlich weit von dem Basiskörper abgehoben, so daß eine Winkelstellung der Führungsleiste relativ zum Basiskörper erzeugt wird.

Als Druckquellen unterschiedlichen Drucks werden insbesondere Pumpen verstanden, die unterschiedliche Drücke erzeugen. Allerdings kann ein in unterschiedlichen Druckleitungen anliegender Druck auch durch andere geeignete Mittel, beispielsweise durch Blenden, insbesondere einstellbare Blenden, in den jeweiligen Druckleitungen erzeugt werden. Als Druckmedium wird insbesondere ein hitzebeständiges Öl oder Druckluft verwendet.

Die Variationsmöglichkeit der Anstellungsmöglichkeiten der Führungsleiste des Flachführungsmoduls wird durch die Zahl der Druckzellen und deren Anordnung erhöht. Insbesondere weist eine bevorzugte Ausgestaltung der Erfindung mehrere Druckzellen auf, die in einer zum Basiskörper parallelen Ebene symmetrisch oder asymmetrisch um einen Mittelpunkt angeordnet sind. Vorzugsweise sind dies vier rechteckige Druckzellen, die nach Art von Quadranten um einen Mittelpunkt angeordnet sind.

Um eine gute Regelung des in den Druckzellen zu erzeugenden Drucks zu ermöglichen, kann an der Führungsseite der Führungsleiste ein Druck-, Kraft- und/oder Distanzsensor angebracht sein. Vorzugsweise sind sowohl Druck-, als auch Kraft-, als auch Distanzsensoren vorgesehen. Insbesondere bevorzugt sind mehrere solcher Sensoren an den Viereckpunkten einer rechteckigen Führungsseite in der Führungsleiste angeordnet. Diese ermöglichen es, den Spalt zwischen der Führungsseite und der ihr gegenüberliegenden Fläche zu ermitteln. Ebenso können an der dem Basiskörper zugewandten Seite der Führungsleiste Druck-, Kraft- oder Distanzsensoren vorgesehen sein. Diese ermitteln vorzugsweise den Abstand zwischen der Führungsleiste und dem Basiskörper. Das Ergebnis dieser Messung kann einer Regelung des Spalts zugeführt werden. Diese kann Einfluß auf den in den Druckzellen gegebenenfalls unterschiedlich zu erzeugenden Druck nehmen. Die Messwerte können von den Sensoren mittels drahtloser Signalübertragung an eine Regeleinheit übermittelt werden. Hierdurch werden die von außen dem Flachführungsmodul zugeführten Leitungen reduziert, so daß das Flachführungsmodul besonders gut als Austauschteil für bestehende Verschleißleisten verwendet werden kann.

Um einen möglichst geringen Verschleiß bei Kontakt mit dem Ständer zu unterliegen, gleichzeitig jedoch den Ständer selbst nicht zu beschädigen, ist die Führungsleiste vorzugsweise aus metallischen und/oder nicht-metallischen Verbundwerkstoffen mit einer verschleiß- und/oder korrosionsgeschützten Gleit-, beziehungsweise Verschleißoberfläche und einem Grundwerkstoff, der als elastischer Tragkörper eingesetzt wird und über ein entsprechendes, integriertes Schmiersystem der Gleitoberfläche verfügen kann, hergestellt.

Auf besonders einfache Weise läßt sich die Druckzelle erzeugen, wenn die der Druckzelle zugewandte Oberfläche der Führungsleiste und/oder des Basiskörpers eine Begrenzungsfläche der Druckzelle bildet. In einem solchen Fall muß die elastische Verbindung, insbesondere das aufvulkanisierte Material, an diesen Flächen nicht aufgebracht werden. Dadurch reduziert sich die Menge des aufzubringenden Materials. Zudem wird die Druckkraft ungedämpft durch elastisches Material unmittelbar auf die der Druckzelle zugewandte Oberfläche der Führungsleiste und/oder des Basiskörpers eingebracht. Dadurch erfolgt eine effizientere Umsetzung der in der Druckzelle erzeugten Ausdehnungskraft.

Ein erfindungsgemäßes Walzgerüst mit einer in einem Einbaustück in einem Ständer des Walzgerüsts gehaltenen Walze kann mindestens ein an dem Einbaustück vorgesehenes, dem Ständer zugewandtes, zuvor beschriebenes Flachführungsmodul und/oder mindestens ein an dem Ständer vorgesehenes, dem Einbaustück zugewandtes, zuvor beschriebenes Flachführungsmodul aufweisen.

Vorzugsweise ist der Führungsseite der Führungsleiste gegenüberliegend eine Führung, beispielsweise eine Verschleißleiste, vorgesehen. Insbesondere kann bei einem Einbaustück mit Flachführungsmodul der dem Flachführungsmodul gegenüberliegende Bereich des Ständers mit einer Führung ausgerüstet sein. Diese Führung kann insbesondere auch ein weiteres Flachführungsmodul sein. Vorzugsweise ist die ständerseitig vorgesehene Führung größer als die Führungsseite am Einbaustück, so daß das Einbaustück im Ständer horizontal und/oder vertikal bewegt werden kann, dabei aber immer noch im Bereich der ständerseitigen Führung bleibt.

Das zuvor beschriebene Flachführungsmodul kann als Stellglied einer Walzenpositionsregelung und/oder zur Schwingungsdämpfung des Einbaustücks eingesetzt werden. Durch Bewegen der Führungsleiste kann die Reibung zwischen Einbaustück und Ständer auf vorgegebene Werte eingestellt werden, so daß Schwingungen des Einbaustücks unter Beibehaltung der Möglichkeit einer Dickenregelung gedämpft werden können. Dies kann beispielsweise über eine durch Bewegungen der Führungsleiste geregelte Anpreßkraft erfolgen. Die erzeugte Schwingungsdämpfung kann durch die Dickenregelung berücksichtigt werden.

Bei einer Bandqualitätsregelung für ein gewalztes Band kann eine ein zuvor beschriebenes Flachführungsmodul verwendende Walzenpositionsregelung vorgesehen sein. So kann beispielsweise die Planheitsregelung für das gewalzte Band Walzenpositionsänderungen (beispielsweise Walzenschränken oder Walzenversatz) erzeugen, in dem durch Verwendung der Stellmöglichkeiten des Flachführungsmoduls eine gewünschte Walzenposition eingestellt wird. Die Bandqualität ist insbesondere die Planheit oder das Profil des Bandes.

Ein Walzverfahren für eine Walzvorrichtung mit einem in einem Walzgerüst beweglich gelagerten Einbaustück, mindestens einem dem Ständer zugewandten, an dem Einbaustück gehaltenen Flachführungsmodul mit einer relativ zum Ständer beweglich gehaltenen Führungsleiste und/oder mindestens einem dem Einbaustück zugewandten, an dem Ständer gehaltenen Flachführungsmodul mit einer relativ zum Einbaustück beweglich gehaltenen Führungsleiste und einem Antrieb zum Bewegen der Führungsleiste(n) kann vorsehen, daß das Spiel zwischen einer dem Ständer zugewandten Führungsseite der Führungsleiste und dem Ständer ermittelt wird, beziehungsweise das Spiel zwischen einer dem Einbaustück zugewandten Führungsseite der Führungsleiste und dem Einbaustück ermittelt wird, und durch Bewegen der Führungsleiste ein Spiel mit einem vorbestimmten Wert eingestellt wird.

Das Einbaustück wird somit nicht mehr durch Führungen in einer Position in dem Ständer verklemmt, sondern das Einbaustück wird beispielsweise auf einer Seite mit einem vorbestimmten Spiel zwischen der Führungsseite der Führungsleiste und dem Ständer gehalten. Dies ermöglicht es unter anderem, daß eine Regelung der Walzkraft und eine Dickenregelung gut durchgeführt werden können. Das Einbaustück ist aufgrund der spielbehafteten Lagerung in dem Ständer zur Weiterleitung einer Walzkraft auf das Walzgut geeignet. Diese Regelung des Spiels erlaubt es, den sich ständig ändernden Geometrieverhältnissen im Walzenständer (Ursachen: Einschnürung, Verschleiß, Temperaturen und andere) Rechnung zu tragen. Auch bei geänderten Geometrieverhältnissen wird durch die Spielregelung das vorbestimmte Spiel eingeregelt. Damit kann während des Walzens nicht nur ein deutlich kleineres Gesamtspiel eingeregelt werden, das Gesamtspiel kann auch bei allen Produktionsarten und Walzkräften konstant gehalten werden. So wird insbesondere verhindert, daß das Spiel der Flachführung zu groß wird und damit die eingangs beschriebenen Nachteile auftreten. Zudem läßt sich der Verschleiß an den Führungsleisten ausgleichen und reduzieren.

Durch die präzisere Führung des Einbaustücks bei unterschiedlichen Geometrieverhältnissen kann bei einem Walzgerüst über die gesamte Produktbreite der zu walzenden Bänder eine gleichmäßige Qualität des Walzprodukts eingehalten werden, insbesondere hinsichtlich der Dickentoleranz, des Dickenquerprofils und der Planheit.

Gemäß einer bevorzugten Ausgestaltung des Walzverfahrens wird das Spiel durch Ermittlung der Relativposition der Führungsseite zum Ständer, beziehungsweise zum Einbaustück ermittelt. Dies kann durch einen oder mehrere an der Führungsseite der Führungsleiste angeordneten Distanzsensoren ermöglicht werden. Alternativ kann durch geeignete Berechnungsmethoden das Meßergebnis eines Kraft- oder Drucksensors an der Führungsseite der Führungsleiste ausgewertet werden, um dabei auf das Spiel zwischen Führungsleiste und Ständer, beziehungsweise Einbaustück rückzuschließen. Außerdem kann mittels Sensoren auf der dem Basiskörper zugewandten Seite der Führungsleiste der Abstand der Führungsleiste zum Basiskörper ermittelt werden. Die räumliche Anordnung der Führungsleiste zum Ständer, bzw. die räumliche Anordnung der Führungsleiste zum Basiskörper wird vorzugsweise mittels dreier Distanzsensoren ermittelt. Liegen beispielsweise Meßergebnisse von vier Distanzsensoren vor, so kann die am besten passende Ebenendarstellung für die Führungsleiste beispielsweise mittels eines Least-Square Ansatzes ermittelt werden. Die Ermittlung der Relativposition der Führungsleiste zum Ständer, bzw. zum Basiskörper kann auch eine Ermittlung des einfachen Abstands zwischen einem Punkt auf der Führungsleiste und dem Ständer, bzw. dem Basiskörper sein.

Die bei der Bestimmung der Relativposition ermittelten Meßwerte können drahtlos übertragen, beispielsweise gefunkt, werden. Dadurch reduziert sich die Zahl der Leitungen, die zu dem Einbaustück gelegt werden müssen.

Bei der Regelung der Anpreßkraft können zuvor genannten Vorteile erreicht werden, wenn ein Walzverfahren für eine Walzvorrichtung mit einem in einem Walzgerüst beweglich gelagerten Einbaustück, mindestens einem dem Ständer zugewandten, an dem Einbaustück gehaltenen Flachführungsmodul mit einer relativ zum Ständer beweglich gehaltenen Führungsleiste und/oder mindestens einem dem Einbaustück zugewandten, an dem Ständer gehaltenen Flachführungsmodul mit einer relativ zum Einbaustück beweglich gehaltenen Führungsleiste und einem Antrieb zum Bewegen der Führungsleiste vorsieht, daß die Anpreßkraft zwischen der Führungsleiste und dem Ständer, beziehungsweise dem Einbaustück ermittelt wird und durch Belasten der Führungsleiste eine Anpreßkraft mit einem vorbestimmten Wert eingestellt wird. Das Belasten ist auch als Entlasten zu verstehen.

Das Bewegen der Führungsleiste kann durch keilförmiges Ausfahren des Flachführungsmoduls erfolgen, so daß der Basiskörper in einem Winkel zur Führungsleiste steht. Alternativ oder ergänzend kann die Führungsleiste relativ zum Basiskörper parallel ausgefahren werden, so daß sich der Abstand eines jeden Punkts der Führungsleiste zum Basiskörper um den gleichen Betrag erhöht. Vorzugsweise wird das keilförmige Ausfahren eingesetzt, um die Planparallelität zwischen zwei, gegenüberliegenden Führungen des Ständers zugewandten Flachführungsmodulen zu erhöhen und damit eine flächigere Lagerung und eine geringere Reibung sowie einen gleichmäßigeren und geringeren Verschleiß zu erzielen. Das parallele Ausfahren der Führungsleiste wird vorzugsweise verwandt, um ein Spiel mit einem vorbestimmten Wert einzustellen.

Das Verhalten des Flachführungsmoduls wird vorzugsweise in einem Regelkreis linearisiert. Es werden insbesondere physikalische Modelle, Kombinationen aus nichtlinearen statistischen oder linearen dynamischen Modellen, identifizierte Modelle, Fuzzy-Modelle oder Neuronale Netze verwendet.

Ein Walzverfahren kann beispielsweise eine gleiche Regelung für mehrere an einem Einbaustück vorgesehenen Flachführungsmodule vorsehen. So können die an gegenüberliegenden Seiten des Einbaustücks angeordneten Flachführungsmodule beide zur Einhaltung eines vorgegebenen Spiels eingeregelt werden. Es können jedoch auch unterschiedliche Regelungen für die einzelnen Einbaustücke vorgesehen sein. Beispielsweise kann das eine Flachführungsmodul des Einbaustücks zur Einhaltung einer bestimmten Anpreßkraft geregelt werden, während das an der gegenüberliegenden Seite angeordnete Flachführungsmodul zur Einhaltung eines vorgegebenen Spalts geregelt wird.

In einer bevorzugten Ausführungsform weist das Walzverfahren eine Planparallelitätsregelung auf, bei der bei einem Walzgerüst mit zwei, gegenüberliegenden Führungen des Ständers zugeordneten, am Einbaustück gehaltenen Flachführungsmodulen durch Bewegen der jeweiligen Führungsleiste eine planparallele Anordnung der Führungsseiten zueinander eingestellt wird.

Um die Beweglichkeit des Einbaustücks in seiner durch die Führungsleisten beeinflußten Führung innerhalb der Führungen des Ständers auf einen vorbestimmten Wert einzustellen, ist es vorteilhaft, ein Gesamtspiel vorzugeben. Dieses Gesamtspiel ist das Spiel, das zwischen der Führungsseite eines ersten Flachführungsmoduls und dem Ständer und zwischen der Führungsseite eines zweiten Flachführungsmoduls auf der gegenüberliegenden Seite des Einbaustücks und dem Ständer ergibt. Dieses wird in einer bevorzugten Ausführungsform der Erfindung über eine Gesamtspielregelung eingestellt.

In einer bevorzugten Ausführungsform der Erfindung werden die beweglichen Führungsleisten dazu eingesetzt, die Position der Walzen zu beeinflussen. Hierzu wird in einer bevorzugten Ausführungsform der Erfindung mittels einer Walzpositionsregelung durch Bewegen der Führungsleisten eine Führungsposition für das Einbaustück eingestellt, die der vorbestimmten Relativposition des Einbaustücks zum Walzgerüst zuzüglich des Gesamtspiels entspricht. Das beweglich in dieser Führung gehaltene Einbaustück nimmt dann diese gewünschte Relativposition ein.

Die Walzenpositionsregelung kann vorzugsweise dazu eingesetzt werden, eine vorgegebene Winkellage des Einbaustücks relativ zum Walzgerüst einzustellen. Hierzu wird die Walzenpositionsregelung als Walzenschränkungsregelung eingesetzt. Gemäß einer alternativen Walzenpositionsregelung kann diese als Walzenversatzregelung ausgebildet sein, bei der bei einem Walzgerüst mit zwei jeweils in Einbaustücken gehaltenen Walzen durch Bewegen der den jeweiligen Führungen am Ständer zugeordneten Führungsleisten ein Versatz der Walzen zueinander eingestellt wird.

Die Regelung der Anpreßkraft kann vorzugsweise dazu eingesetzt werden, eine gewünschte Reibung zwischen den Führungsseiten der Führungsleisten und dem Ständer einzustellen. Diese Reibung kann zudem eingesetzt werden, um die Schwingungsdämpfung einzustellen.

Die vorbeschriebenen Regelungen können auch umgesetzt werden, in dem eine Führungsleiste eines an dem Ständer vorgesehenen Flachführungsmodul bewegt wird.

Vorzugsweise wird das zuvor beschriebene erfindungsgemäße Flachführungsmodul zur Durchführung eines Walzverfahrens verwendet.

Die vorgesehene Bestimmung der Relativposition des Einbaustücks relativ zu der Führungsleiste kann, ergänzt durch eine Ermittlung der Relativposition der Führungsleiste relativ zum Walzgerüst, vorteilhafterweise dazu eingesetzt werden, die Lage der Walzen genau zu ermitteln. Dadurch ist es möglich, den Walzprozeß präziser zu regeln.

Insbesondere wird gemäß bei einem Walzverfahren für ein Walzgerüst mit einem an einem Einbaustück gehaltenen Flachführungsmodul mit einem Basiskörper und einer relativ zum Basiskörper beweglichen, dem Ständer zugewandten Führungsleiste und an der Führungsleiste vorgesehenen Sensoren mittels der Sensoren der Abstand der Führungsleiste zum Ständer und der Abstand der Führungsleiste zum Basiskörper ermittelt.

In Kenntnis der relativen Position der an der Führungsleiste vorgesehenen Sensoren zueinander, kann durch diese Messung auf einfache Weise die Position des Einbaustücks relativ zum Ständer ermittelt werden.

Nachfolgend wird die Erfindung anhand einer ein Ausführungsbeispiel näher darstellenden Zeichnung erläutert. Darin zeigen

Fig. 1      das Flachführungselement in einer Seitenansicht,
Fig. 2      das Flachführungsmodul in einer geschnittenen Draufsicht,
Fig. 3      das Flachführungsmodul in einer geschnittenen Seitenansicht,
Fig. 4      ein das erfindungsgemäße Flachführungsmodul umfassendes Regelungssystem in einer schematischen Ansicht,
Fig. 5      ein Walzgerüst mit zwei in Einbaustücken gehaltenen Walzen in einer schematischen Seitenansicht,
Fig. 6      eine Darstellung einer hierarchischen Struktur eines Regelkonzepts,
Fig. 7      eine graphische Darstellung einer Kompensation von Nichtlinearitäten,
Fig. 8      eine graphische Darstellung einer Abstands-/ Kraftregelung und Planparallelitätsregelung,
Fig. 9      eine graphische Darstellung einer Gesamtspielregelung
Fig. 10     eine graphische Darstellung einer Walzenschränkungs-/-versatz-und Anpreßkraftregelung und
Fig. 11     eine graphische Darstellung einer Planheitsregelung und Dickenregelung.

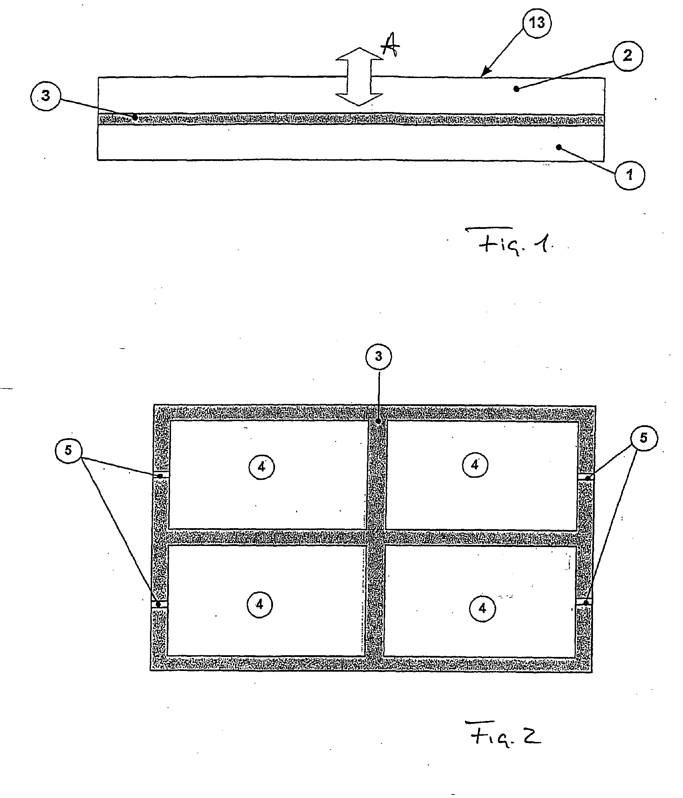

Das als austauschbares Modul ausgebildete, in Figur 1 dargestellte Flachführungsmodul für ein Walzgerüst weist einen Basiskörper 1, eine Führungsleiste 2 und ein den Basiskörper 1 mit der Führungsleiste 2 verbindendes, auf den Basiskörper 1 und die Führungsleiste 2 aufvulkanisiertes Material 3 auf. An der einem nicht dargestellten Ständer zugeordneten Seite weist die Führungsleiste 2 eine Führungsseite 13 auf. Das Flachführungsmodul wird von einem nicht dargestellten Eihbaustück gehalten. Durch Druckbeaufschlagung ist die Führungsleiste 2 relativ zum Basiskörper und zumindest in Richtung des dargestellten Doppelpfeils A beweglich. Dabei erfolgt das Zurückziehen der Führungsleiste 2 auf den Basiskörper 1 zu durch die in dem aufvulkanisierten Material 3 durch Druckbeaufschlagung hervorgerufenen Rückstellkräfte und ggf. durch Erzeugen eines Unterdrucks.

Wie in Figur 2 dargestellt, werden durch das aufvulkanisierte Material 3 vier Druckzellen 4 ausgebildet. Diese sind nach Art von Quadranten um einen gemeinsamen Mittelpunkt angeordnet. Zufuhrkanäle 5 dienen der Zufuhr von Druckmittel in die geschlossenen Druckzellen 4.

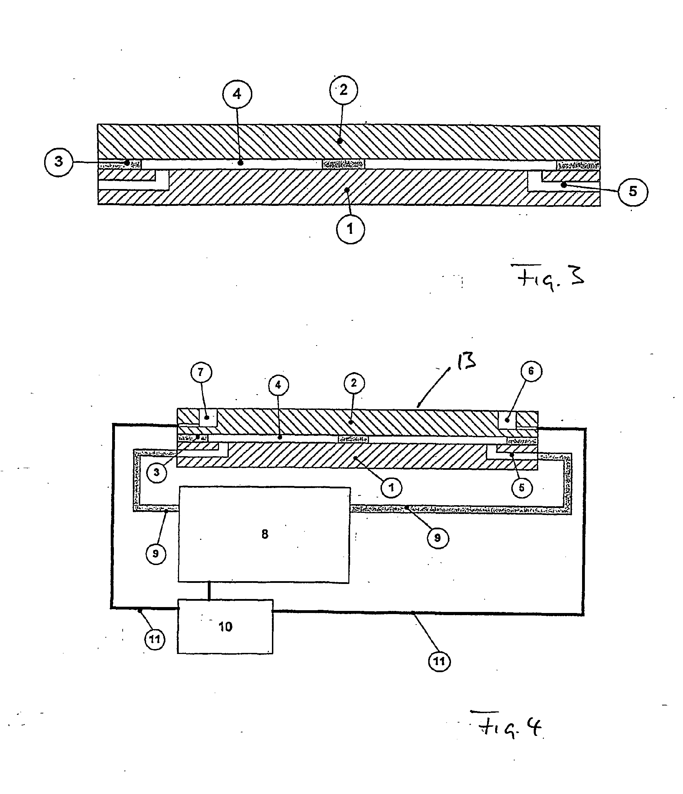

Wie insbesondere der Schnittdarstellung der Figur 3 zu entnehmen ist, so bilden die der jeweiligen Druckzelle 4 zugewandte Oberfläche der Führungsleiste 2 und des Basiskörpers 1 eine Begrenzungsfläche der jeweiligen Druckzelle 4. In Figur 3 ist eine weitere Möglichkeit der Druckzufuhr durch Zufuhrkanäle 5 dargestellt.

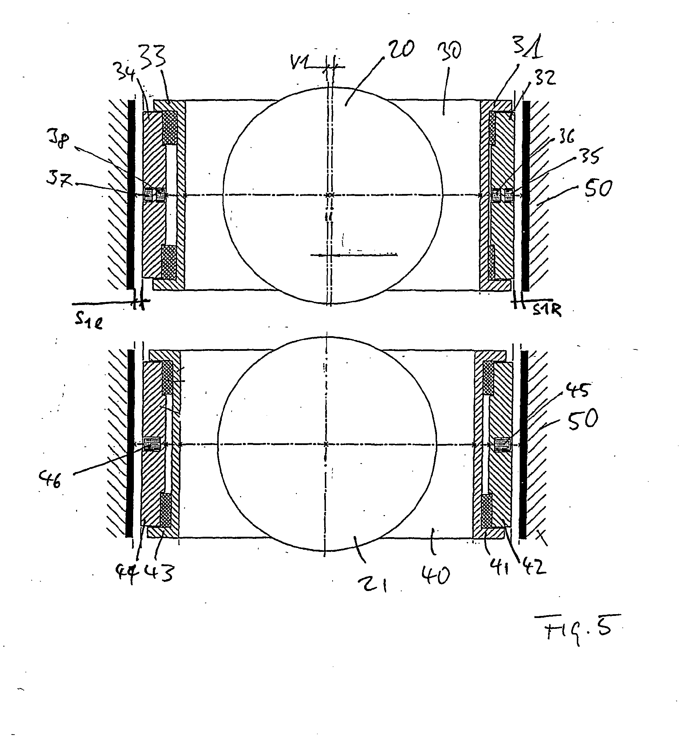

Figur 4 läßt erkennen, daß die Führungsleiste 2 an der Führungsseite 13 einen Drucksensor 6 und einen Distanzsensor 7 aufweisen kann. Diese messen die Distanz der Führungsleiste 1 zum nicht dargestellten Ständer, bzw. die durch das Einbaustück auf die Führungsleiste 1 einwirkende Druckbelastung. Diese Meßergebnisse werden über Signalleitungen 11 einem Regler 10 zugeführt. Dieser ermittelt auf Grundlage der Meßergebnisse den in den jeweiligen Druckkammern 4 zu erzeugenden Druck und regelt dementsprechend das Hydraulikaggregat 8. Dieses ist dazu ausgebildet, über Hydraulikleitungen 9 Druckmedium mit unterschiedlichem Druck über die Einlaßkanäle 5 in die jeweiligen Druckzellen 4 einzubringen. Dadurch kann eine von einer parallelen Verschiebung der Führungsleiste 2 zum Basiskörper 1 unterschiedliche Bewegung der Führungsleiste 2 erzeugt werden. Damit kann auch bei schiefstehendem Einbaustück eine parallele Ausrichtung der Führungsseite 13 zum Ständer gewährleistet werden.

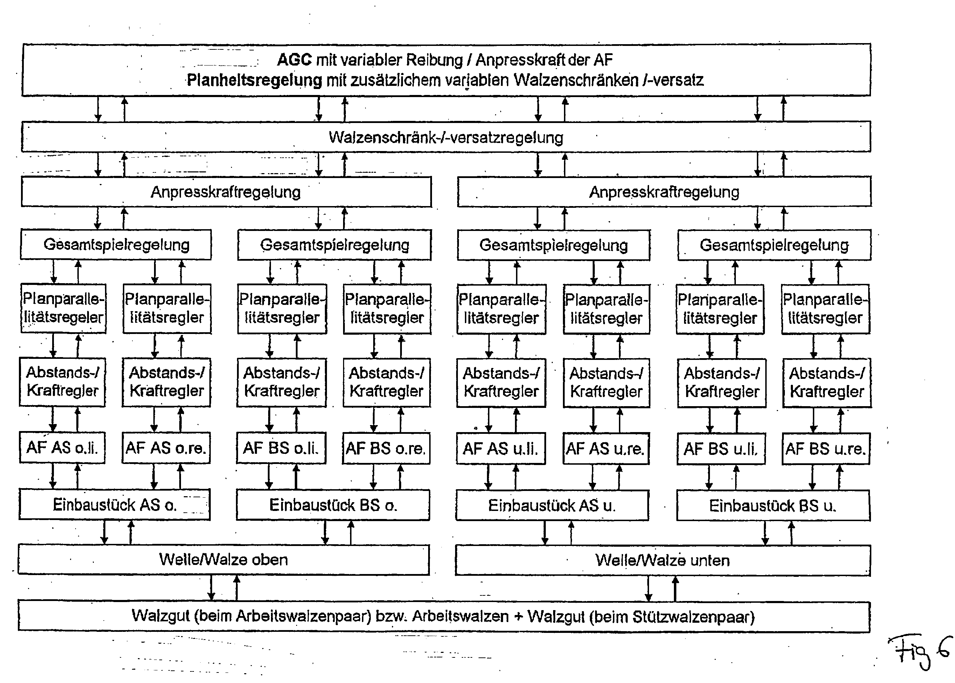

Figur 5 zeigt den schematischen Aufbau eines mit zwei in Einbaustücken 30, 40 gehaltenen Walzen 20,21 ausgestatteten Teil eines Walzgerüsts 50.

Gezeigt ist die Bedienseite (BS) des Walzgerüsts. Das obere Einbaustück 30 weist Flachführungsmodule 31,33 mit Führungsleisten 32,34 auf. Ebenso weist das untere Einbaustück Flachführungsmodule 41,43 mit Führungsleisten 42,44 auf. In den Führungsleisten 32,34 sind Distanzsensoren 35,36 und 37,38 vorgesehen. Die Führungsleisten 42 und 44 weisen Distanzsensoren 45 und 46 auf. Zudem sind an der Führungsseite der Führungsleisten 32,34,42,44 nicht dargestellte Drucksensoren vorgesehen.

Fig. 5 zeigt, daß zwischen den Führungsleisten 32,34,42,44 und den ihnen zugewandten Führungen des Ständers 50 das gleiche Spiel (S1I,S1R) eingeregelt ist. Jedoch zeigt Fig. 5 auch, daß durch Beeinflussung des Abstandes zwischen Basiskörper und Führungsleiste ein Versatz V1 der Mittellinie der oberen Walze 20 zur Walze 21 eingeregelt werden kann. Dieser Versatz kann für die Planheitsregelung des Bandes verwendet werden.

Die gegenüberliegenden Enden der Walzen 20,21 werden auf der Antriebsseite (AS) ebenfalls in nicht dargestellten Einbaustücken mit gleicherweise angeordneten, ebenfalls nicht dargestellten Flachführungsmodulen (= Adaptronische Flachführungen = "AF") in einem weiteren, nicht dargestellten Walzenständer gehalten.

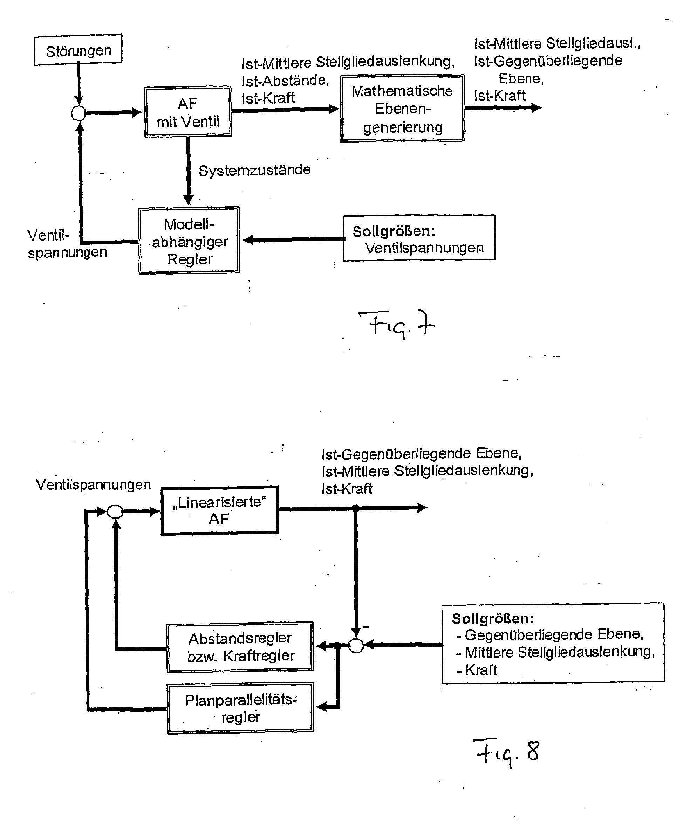

Gemäß Figur 6 wird ein dezentrales, hierarchisches Regelungskonzept eingesetzt. Dieses weist mehrere Ebenen auf, die aufeinander aufbauen. Für jedes Flachführungsmodul ist zunächst eine Kompensation der Nichtlinearitäten vorgesehen (Fig. 6: AF AS oben links, AF AS oben rechts, AF BS oben links, AF BS oben rechts, AF AS unten links, AF AS unten rechts, AF BS unten links, AF BS unten rechts).

Dieser unterste Regelkreis ist zur Kompensation der Nichtlinearitäten bei der Regelung des Flachführungsmodul ausgelegt. Dieser Regelkreis verhält sich im Idealfall wie ein lineares System. Hierzu wird in dem modellabhängigen Regler ein dynamisches Modell des Flachführungsmoduls eingesetzt, das zudem das Zeitverhalten wiedergibt. Das Modell wird durch physikalische Modellbildung, Identifikationsverfahren oder auch die Methode der neuronalen Netze ermittelt. Je nach Modell wird dann eine exakte Linearisierung, beziehungsweise eine Ein-/Ausgangslinearisierung (Zustandsrückführung) oder eine direkte Linearisierung des Modells nach Taylor durchgeführt.

Der unterste Regelkreis ermittelt aus der als Sollgröße vorgegebenen Ventilspannung und den an dem Flachführungsmodul und dem Walzgerüst ermittelten Systemzuständen eine einzustellende Ventilspannung, die unter Berücksichtigung von Störungen an den Zuleitungen zu den Druckzellen des Flachführungsmoduls umgesetzt werden (Fig. 7).

Zur Ermittlung der Systemzustände werden unter anderem an drei Punkten auf der Führungsseite 13 der Führungsleiste 2 des an dem Einbaustück angeordneten Flachführungsmoduls die jeweiligen Distanzen der Führungsseite zum Ständer mittels an der Führungsseite angeordneten Distanzsensoren ermittelt. Außerdem werden unter anderem an drei Punkten auf der dem Basiskörper 1 zugewandten Seite der Führungsleiste 2 die jeweiligen Distanzen dieser Führungsseite 13 zum am Einbaustück plan anliegenden Basiskörper 1 mittels an dieser Seite angeordneten Distanzsensoren ermittelt. Aufgrund dieser Messungen wird die räumliche Lage der Führungsleiste 2 im Verhältnis zum Ständer und zum Einbaustück bestimmt. Aus diesen Werten wird eine Mathematische Ebene ("gegenüberliegende Ebene") generiert, die die Lage der Führungsleiste 2 zum Basiskörper 1 und damit zum Einbaustück beschreibt. Diese wird als Hessesche Normalform beschrieben. Der Koordinatenursprung ist der geometrische Mittelpunkt der Führungsseite 13 der Führungsleiste 2. So wird die gegenüberliegende Ebene durch einen senkrecht zur Führungsseite definierten Ebenen-Abstand und zwei die gegenüberliegende Ebene aufspannende Vektoren definiert. Durch einen an der dem Ständer zugewandten Führungsseite 13 vorgesehenen Kraftsensor wird ferner die Anpresskraft der Führungsleiste 2 an den Ständer ermittelt.

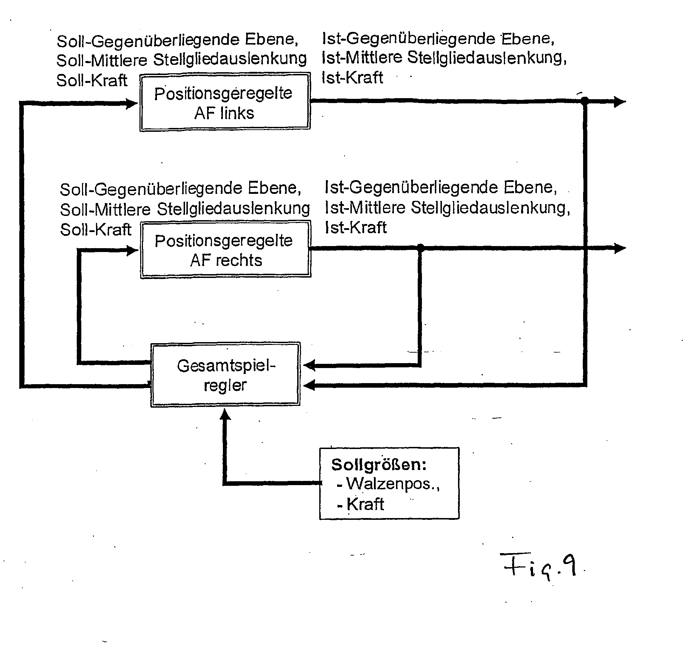

Bei der Kompensation der Nichtlinearitäten (Fig. 7) wird somit die vorhandene mittlere Stellgliedauslenkung (Ist-Mittlere Stellgliedauslenkung), die Lage der gegenüberliegenden Ebene (Ist-Gegenüberliegende Ebene) und die vorhandene Anpresskraft zwischen Führungsleiste 2 und Ständer (Ist-Kraft) ermittelt. Diese Größen werden der Abstands-/Kraftregelung und Planparallelitätsregelung der nächst höheren Ebenen (Fig. 8) zugeführt.

Mit der Abstands-/Kraftregelung wird wahlweise der Ebenen-Abstand oder die Anpresskraft geregelt. Als Regler werden für die Regelung des Ebenen-Abstands ein PD-Regler, für die Regelung der Anpresskraft ein PID-Regler verwendet. Wie aus Fig. 8 ersichtlich, ermittelt der Abstands-, bzw. Kraftregler aus der als Sollgrößen vorgegebenen Ausrichtung der gegenüberliegenden Ebene und der mittleren Stellgliedauslenkung, beziehungsweise der Soll-Anpresskraft und den aus der Kompensation der Nichtlinearität (Fig. 7) ermittelten Ist-Werten dieser Größen eine einzustellende Ventilspannung, die der Kompensation der Nichtlinearität (Fig. 7) als Sollgröße zugeführt wird.

Die Planparallelitätsregelung (Figur 8) sorgt für eine planparallele Ausrichtung der Führungsseiten zueinander. Dies führt zu einem gleichmäßigeren und geringeren Verschleiß und erhöht damit die Lebensdauer der adaptronischen Flachführung. Hierzu wird bei der Berechnung der einzustellenden Ventilspannungen die gegenüberliegende Ebene im Modell in den Koordinatenursprung der Führungsseite verschoben. Anschließend wird an vier Referenzpunkten der Oberfläche der Führungsseite die relative Lage dieser verschobenen gegenüberliegenden Ebene zur Führungsseite ermittelt. Als vier Referenzpunkte werden die geometrischen Mittelpunkte der Druckzellen gewählt. Die zwischen Referenzpunkten und den zugehörigen Punkten auf der verschobenen, gegenüberliegenden Ebene ermittelten Werte werden als Regelgrößen verwendet. Sind alle Regelgrößen gleich null, liegt die gegenüberliegende- Ebene parallel zur Führungsseite. Als Regler wird ein PD-Regler verwendet.

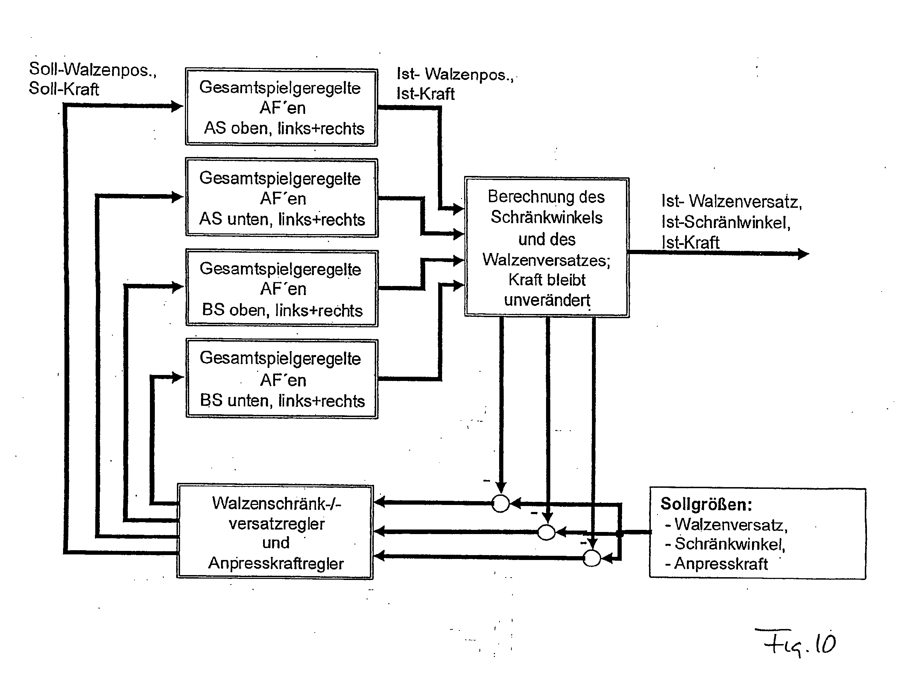

Die Gesamtspielregelung (Figur 9) führt dazu, daß ein vorgegebenes Gesamtspiel zweier adaptronischer Flachführungen beispielsweise auch bei unterschiedlich starker Einschnürung, bzw. unterschiedlich starkem Verschleiß eingehalten wird. Die Gesamtspielregelung sorgt zum einen für die Einhaltung des Gesamtspiels und zum anderen für die Bestimmung der Soll-Gegenüberliegenden Ebene und der Soll-Mittleren Stellgliedauslenkung. Das Gesamtspiel ist definiert als Summe der beiden Einzelspiele $s_{1l}, s_{1r}$ zwischen den Führungsleisten und der gegenüberliegenden Führung des Ständers (linke und rechte Seite):

$$s_{ges} := s_{1l} + s_{1r}$$

Die Aufteilung des vorgegeben Gesamtspiels $s_{ges}$ auf die Einzelspiele erfolgt über:

$$s_{1l} = a_{1,ges} s_{ges} \quad , \quad s_{1l} = a_{2,ges} s_{ges} \quad mit \ a_{1,ges} + a_{2,ges} = 1$$

Im einfachsten Fall verwendet man eine mittige Position: $a_{1,ges} = a_{2,ges} = 0.5$ Mit einem körperfesten Koordinatensystem (einseitig, in der gegenüberliegenden Ebene) und den Vorgaben der Walzenpositionen lassen sich die Soll-mittleren Stellgliedauslenkungen sowie die Soll-Gegenüberliegende Ebene berechnen. Zur Kompensation der zeitlich veränderlichen Gerüsteinschürung kann man beispielsweise die dem körperfesten Koordinatensystem gegenüberliegende Soll-Mittleren Auslenkungen verwenden ohne den Walzenversatz oder das Schränken zu beeinflussen.

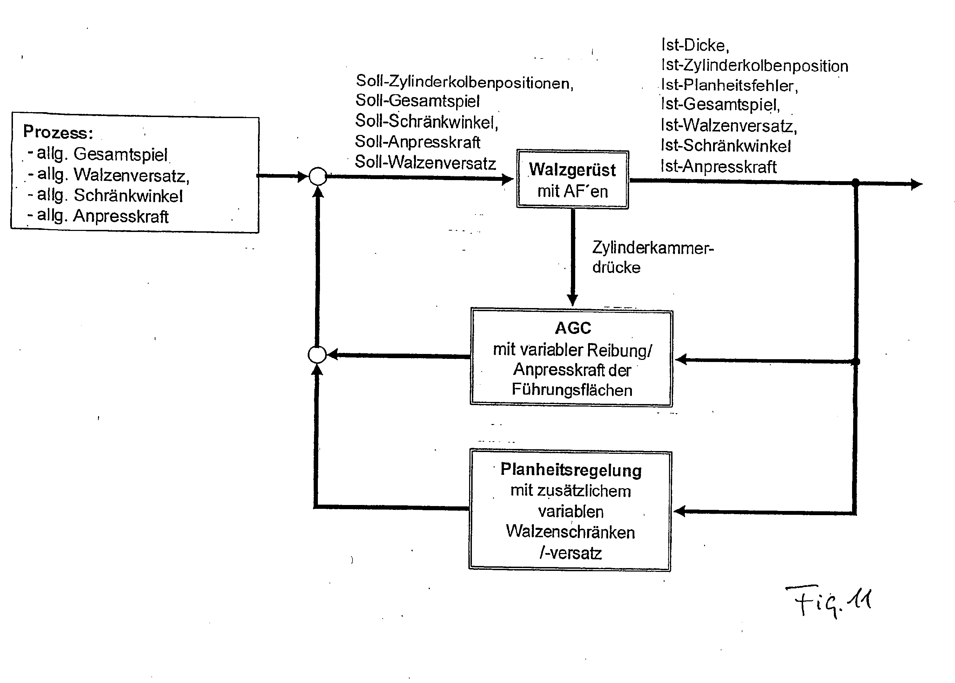

Die Walzenschränkregelung (Figur 10) regelt die Einhaltung der vorgegebenen Schränkungswinkel. Die Walzenversatzregelung stellt den gewünschten Walzenversatz ein. Hierzu werden PID-Regler verwendet.

Zur Schwingungsdämpfung läßt sich die Reibung zwischen den Führungsseiten und den Seiten des Einbaustücks über eine entsprechende Anpreßkraft einstellen. Diese Anpreßkraft ist bei der Dickenregelung (AGC) zu berücksichten. Um den Restplanheitsfehler besser ausregeln zu können, kann zusätzlich das Walzenschränken eingesetzt werden (vgl. Figur 11).

**Patentansprüche**

1.  Flachführungsmodul, insbesondere für ein Walzgerüst, mit einem Basiskörper (1), einer Führungsleiste (2) und mindestens einer zwischen dem Basiskörper (1) und der Führungsleiste (2) angeordneten Druckzelle (4), die die Führungsleiste (2) von dem Basiskörper fortbewegen kann, **dadurch gekennzeichnet, daß** die Führungsleiste (2) und der Basiskörper (1) zumindest teilweise über eine mit dem Basiskörper (1) und der Führungsleiste (2) verbundene elastische Verbindung verbunden sind.

2.  Flachführungsmodul nach Anspruch 1, **dadurch gekennzeichnet, daß** die Führungsleiste (2) und der Basiskörper (1) zumindest teilweise über ein auf den Basiskörper (1) und die Führungsleiste (2) aufvulkanisiertes Material (3) verbunden sind.

3.  Flachführungsmodul nach Anspruch 1 oder 2, **dadurch gekennzeichnet, daß** die Führungsleiste (2) aus einem metallischen und/oder nicht-metallischen Werkstoff gefertigt wird.

4.  Flachführungsmodul nach einem der Ansprüche 1 bis 3, **dadurch gekennzeichnet, daß** die Führungsleiste (2) aus einem metallischen und/oder nicht-metallischen Verbundwerkstoff gefertigt wird.

5.  Flachführungsmodul nach einem der Ansprüche 1 bis 4, **dadurch gekennzeichnet, daß** eine Führungsseite (13) der Führungsleiste (2) verschleiß-und/oder korrosionsgeschützt ist.

6.  Flachführungsmodul nach einem der Ansprüche 1 bis 5, **dadurch gekennzeichnet, daß** ein die Führungsseite (13) tragender Grundwerkstoff als elastischer Tragkörper ausgebildet ist.

7.  Flachführungsmodul nach einem der Anspruch 4, **dadurch gekennzeichnet, daß** die Teilwerkstoffe des Verbundwerkstoffs unter anwendungsbezogenen Normalbedingungen eine belastbare, unzertrennliche Einheit bilden.

8.  Flachführungsmodul nach einem der Ansprüche 1 bis 7, **dadurch gekennzeichnet, daß** die Einheit aus Führungsleiste (2), elastischer Verbindung und Basiskörper (1) Dämpfungseigenschaften aufweist, die eine Anschraubfläche des Walzenständer und/oder des Einbaustücks gegen mechanische Verformungen schützt.

9.  Flachführungsmodul nach einem der Ansprüche 1 bis 8, **dadurch gekennzeichnet, daß** die Führungsseite (13) über ein integriertes Schmiersystem geschmiert wird, das unabhängig von der Schmierung der Walzanlage arbeiten kann.

10. Flachführungsmodul nach einem der Ansprüche 1 oder 9, **gekennzeichnet durch** mehrere Druckzellen (4) und mindestens zwei unterschiedliche Druckleitungen (9), die jeweils unterschiedliche Druckzellen (4) mit Druckquellen unterschiedlichen Drucks verbinden.

11. Flachführungsmodul nach einem der Ansprüche 1 bis 10, **gekennzeichnet durch** mehrere Druckzellen (4), die in einer zum Basiskörper (1) parallelen Ebene symmetrisch oder asymmetrisch um einen Mittelpunkt angeordnet sind.

12. Flachführungsmodul nach einem der Ansprüche 1 bis 11, **dadurch gekennzeichnet, daß** an einer Führungsseite (13) der Führungsleiste (2) ein Druck-, ein Kraft- und/oder ein Distanzsensor (6, 7) angeordnet ist.

13. Flachführungsmodul nach einem der Ansprüche 1 bis 12, **dadurch gekennzeichnet, daß** die Führungsleiste (2) seitlich geführt ist.

14. Flachführungsmodul nach einem der Ansprüche 1 bis 13, **dadurch gekennzeichnet, daß** die der Druckzelle zugewandte Oberfläche der Führungsleiste (2) und/oder des Basiskörpers (1) eine Begrenzungsfläche mindestens einer Druckzelle (4) bildet und/oder mindestens eine Druckzelle (4) zumindest teilweise durch die elastische Verbindung begrenzt wird.

15. Walzgerüst mit einer in einem Einbaustück in einem Ständer des Walzgerüsts gehaltenen Walze, **gekennzeichnet durch** mindestens ein an dem Einbaustück vorgesehenes, dem Ständer zugewandtes Flachführungsmodul nach einem der Ansprüche 1 bis 14 und/oder **durch** mindestens ein an dem Ständer vorgesehenes, dem Einbaustück zugewandtes Flachführungsmodul nach einem der Ansprüche 1 bis 14.

**Claims**

1. Flat guide module, in particular for a roll stand, with a base body (1), a guide strip (2), and, arranged between the base body (1) and the guide strip (2), at least one pressure cell (4) which can move the guide strip (2) away from the base body, **characterised in that** the guide strip (2) and the base body (1) are at least partially connected by means of an elastic connection connecting the base body (1) and the guide strip (2).

2. Flat guide module according to Claim 1, **characterised in that** the guide strip (2) and the base body (1) are at least partially connected by means of material (3) vulcanised onto the base body (1) and the guide strip (2).

3. Flat guide module according to Claim 1 or 2, **characterised in that** the guide strip (2) is manufactured from a metallic and/or non-metallic material.

4. Flat guide module according to any one of Claims 1 to 3, **characterised in that** the guide strip (2) is manufactured from a metallic and/or non-metallic compound material.

5. Flat guide module according to any one of Claims 1 to 4, **characterised in that** a guide side (13) of the guide strip (2) is protected against wear and/or corrosion.

6. Flat guide module according to any one of Claims 1 to 5, **characterised in that** a basic material carrying the guide side (13) is designed as an elastic carrying body.

7. Flat guide module according to Claim 4, **characterised in that** the part materials of the composite material form, under application-related normal conditions, one inseparable unit capable of supporting a load.

8. Flat guide module according to any one of Claims 1 to 7, **characterised in that** the unit formed of guide strip (2), elastic connection, and base body (1) has damping properties, which protect a bolt-on surface of the roll stands and/or of the installation piece against mechanical deformation.

9. Flat guide module according to any one of Claims 1 to 8, **characterised in that** the guide side (13) is lubricated by means of an integrated lubricating system, which can operate independently of the lubrication of the roller system.

10. Flat guide module according to any one of Claims 1 to 9, **characterised in that** several pressure cells (4) and at least two different pressure lines (9) connect the different pressure cells (4) in each case to pressure sources having different pressures.

11. Flat guide module according to any one of Claims 1 to 10, **characterised in that** several pressure cells (4) are arranged in a plane parallel to the base body (1) symmetrically or asymmetrically about a mid-point.

12. Flat guide module according to any one of Claims 1 to 11, **characterised in that** a pressure, force, and/or distance sensor (6, 7) is arranged on one guide side (13) of the guide strip (2).

13. Flat guide module according to any one of Claims 1 to 12, **characterised in that** the guide strip (2) is guided laterally.

14. Flat guide module according to any one of Claims 1 to 13, **characterised in that** the surface of the guide strip (2) facing the pressure cell and/or the base body (1) forms a delimiting surface of at least one pressure cell (4) and/or at least one pressure cell (4) is delimited at least partially by the elastic connection.

15. Roll stand with an installed piece in a stand of the roll stand, **characterised by** at least one flat guide module provided at the installation piece, facing the stand, according to any one of Claims 1 to 14 and/or by at least one flat guide module provided at the stand and facing the installed piece, according to any one of Claims 1 to 14.


**Revendications**

1. Module de guidage plat, en particulier pour une cage de laminoir, avec un corps de base (1), une barre de guidage (2) et au moins une cellule de pression (4) disposée entre le corps de base (1) et la barre de guidage (2) et qui peut écarter la barre de guidage (2) du corps de base, **caractérisé par le fait que** la barre de guidage (2) et le corps de base (1) sont reliés au moins partiellement par une liaison élastique reliée au corps de base (1) et à la barre de guidage (2).

2. Module de guidage plat selon la revendication 1, **caractérisé par le fait que** la barre de guidage (2) et le corps de base (1) sont reliés au moins partiellement par un matériau (3) fixé par vulcanisation sur le corps de base (1) et la barre de guidage (2).

3. Module de guidage plat selon la revendication 1 ou 2, **caractérisé par le fait que** la barre de guidage (2) est réalisée dans un matériau métallique et/ou non métallique.

4. Module de guidage plat selon l'une des revendications 1 à 3, **caractérisé par le fait que** la barre de guidage (2) est réalisée dans un matériau composite métallique et/ou non métallique.

5. Module de guidage plat selon l'une des revendications 1 à 4, **caractérisé par le fait qu'**une face de guidage (13) de la barre de guidage (2) est protégée contre l'usure et/ou la corrosion.

6. Module de guidage plat selon l'une des revendications 1 à 5, **caractérisé par le fait qu'**un matériau de base portant la face de guidage (13) est réalisé sous la forme d'un corps porteur élastique.

7. Module de guidage plat selon la revendication 4, **caractérisé par le fait que** les matériaux composants du matériau composite forment dans des conditions normales par rapport à l'application une unité inséparable résistante à la charge.

8. Module de guidage plat selon l'une des revendications 1 à 7, **caractérisé par le fait que** l'unité formée de la barre de guidage (2), de la liaison élastique et du corps de base (1) présente des propriétés d'amortissement qui protègent une surface de vissage du montant de laminoir et/ou de la pièce incorporée contre les déformations mécaniques.

9. Module de guidage plat selon l'une des revendications 1 à 8, **caractérisé par le fait que** la face de guidage (13) est lubrifiée par un système de lubrification intégré qui peut fonctionner indépendamment de la lubrification du laminoir.

10. Module de guidage plat selon l'une des revendications 1 ou 9, **caractérisé par** plusieurs cellules de pression (4) et au moins deux lignes de pression (9) différentes qui relient chacune des cellules de pression (4) différentes à des sources de pression de pression différente.

11. Module de guidage plat selon l'une des revendications 1 à 10, **caractérisé par** plusieurs cellules de pression (4) qui sont disposées symétriquement ou asymétriquement autour d'un point central dans un plan parallèle au corps de base (1).

12. Module de guidage plat selon l'une des revendications 1 à 11, **caractérisé par le fait qu'**un capteur de pression, un capteur de force et/ou de distance (6, 7) est disposé sur une face de guidage (13) de la barre de guidage (2).

13. Module de guidage plat selon l'une des revendications 1 à 12, **caractérisé par le fait que** la barre de guidage (2) est guidée latéralement.

14. Module de guidage plat selon l'une des revendications 1 à 13, **caractérisé par le fait que** la surface de la barre de guidage (2) et/ou du corps de base (1) tournée vers la cellule de pression forme une surface de délimitation d'au moins une cellule de pression (4) et/ou au moins une cellule de pression (4) est limitée au moins partiellement par la liaison élastique.

15. Cage de laminoir avec un cylindre tenu dans une pièce incorporée dans un montant de la cage de laminoir, **caractérisé par** au moins un module de guidage plat selon l'une des revendications 1 à 14 prévu sur la pièce incorporée et tourné vers le montant et/ou par au moins un module de guidage plat selon l'une des revendications 1 à 14 prévu sur le montant et tourné vers la pièce incorporée.

Fig. 1

Fig. 2

Fig. 3

Fig. 4

Fig. 5

```
┌─────────────────────────────────────────────────────────────────────────────┐
│              AGC mit variabler Reibung / Anpresskraft der AF                  │
│    Planheitsregelung mit zusätzlichem variablen Walzenschränken /-versatz     │
└─────────────────────────────────────────────────────────────────────────────┘

┌─────────────────────────────────────────────────────────────────────────────┐
│                      Walzenschränk-/-versatzregelung                          │
└─────────────────────────────────────────────────────────────────────────────┘

┌───────────────────────────────────┐   ┌───────────────────────────────────┐
│       Anpresskraftregelung        │   │       Anpresskraftregelung        │
└───────────────────────────────────┘   └───────────────────────────────────┘

┌──────────────────┐ ┌──────────────────┐ ┌──────────────────┐ ┌──────────────────┐
│ Gesamtspielregelung│ │Gesamtspielregelung│ │Gesamtspielregelung│ │Gesamtspielregelung│
└──────────────────┘ └──────────────────┘ └──────────────────┘ └──────────────────┘

Planparalle-  Planparalle-  Planparalle-  Planparalle-  Planparalle-  Planparalle-  Planparalle-  Planparalle-
litätsregeler litätsregler  litätsregler  litätsregler  litätsregler  litätsregler  litätsregler  litätsregler

Abstands-/    Abstands-/    Abstands-/    Abstands-/    Abstands-/    Abstands-/    Abstands-/    Abstands-/
Kraftregler   Kraftregler   Kraftregler   Kraftregler   Kraftregler   Kraftregler   Kraftregler   Kraftregler

AF AS o.li.   AF AS o.re.   AF BS o.li.   AF BS o.re.   AF AS u.li.   AF AS u.re.   AF BS u.li.   AF BS u.re.

┌──────────────────┐ ┌──────────────────┐ ┌──────────────────┐ ┌──────────────────┐
│ Einbaustück AS o. │ │ Einbaustück BS o. │ │ Einbaustück AS u. │ │ Einbaustück BS u. │
└──────────────────┘ └──────────────────┘ └──────────────────┘ └──────────────────┘

┌───────────────────────────────────┐   ┌───────────────────────────────────┐
│          Welle/Walze oben          │   │          Welle/Walze unten         │
└───────────────────────────────────┘   └───────────────────────────────────┘

┌─────────────────────────────────────────────────────────────────────────────┐
│ Walzgut (beim Arbeitswalzenpaar) bzw. Arbeitswalzen + Walzgut (beim Stützwalzenpaar) │
└─────────────────────────────────────────────────────────────────────────────┘
```

Fig 6

Fig. 7

Fig. 8

Soll-Gegenüberliegende Ebene,   Ist-Gegenüberliegende Ebene,
Soll-Mittlere Stellgliedauslenkung   Ist-Mittlere Stellgliedauslenkung,
Soll-Kraft                                   Ist-Kraft

**Positionsgeregelte AF links**

Soll-Gegenüberliegende Ebene,   Ist-Gegenüberliegende Ebene,
Soll-Mittlere Stellgliedauslenkung   Ist-Mittlere Stellgliedauslenkung,
Soll-Kraft                                   Ist-Kraft

**Positionsgeregelte AF rechts**

**Gesamtspiel-regler**

**Sollgrößen:**
- Walzenpos.,
- Kraft

Fig.9

Soll-Walzenpos.,
Soll-Kraft

Gesamtspielgeregelte
AF'en
AS oben, links+rechts

Ist- Walzenpos.,
Ist-Kraft

Gesamtspielgeregelte
AF'en
AS unten, links+rechts

Gesamtspielgeregelte
AF'en
BS oben, links+rechts

Gesamtspielgeregelte
AF'en
BS unten, links+rechts

Berechnung des
Schränkwinkels
und des
Walzenversatzes;
Kraft bleibt
unverändert

Ist- Walzenversatz,
Ist-Schränlwinkel,
Ist-Kraft

Walzenschränk-/-
versatzregler
und
Anpresskraftregler

Sollgrößen:
- Walzenversatz,
- Schränkwinkel,
- Anpresskraft

Fig. 10

EP 1 583 619 B1

Fig. 11

**Prozess:**
- allg. Gesamtspiel
- allg. Walzenversatz,
- allg. Schränkwinkel
- allg. Anpresskraft

Soll-Zylinderkolbenpositionen,
Soll-Gesamtspiel
Soll-Schränkwinkel,
Soll-Anpresskraft
Soll-Walzenversatz

**Walzgerüst mit AF'en**

Zylinderkammer-
drücke

**AGC**
mit variabler Reibung/
Anpresskraft der
Führungsflächen

**Planheitsregelung**
mit zusätzlichem
variablen
Walzenschränken
/-versatz

Ist-Dicke,
Ist-Zylinderkolbenposition
Ist-Planheitsfehler,
Ist-Gesamtspiel,
Ist-Walzenversatz,
Ist-Schränkwinkel
Ist-Anpresskraft